# FASCICULE DE BREVET EUROPEEN

(11) **EP 1 818 834 B1**
(45) Date de publication et mention de la délivrance du brevet: **29.07.2009**
(21) Numéro de dépôt: 07290023.6
(22) Date de dépôt: 09.01.2007
(51) Int. Cl.: G06F 13/40

(54) **Agencement de cartes à modules mémoire totalement bufférisés et utilisation d'une puce entre deux modules consécutifs**
Fully-buffered dimm Modulanordnung und Benutzung von einem Buffer-Speicher zwischen zwei konsekutiven Module
Fully-buffered dimm modules topology and use of a buffer device between two consecutive modules

(30) Priorité: 11.01.2006 FR 0600249
(43) Date de publication de la demande: 15.08.2007
(73) Titulaire: Bull S.A.S., 78340 Les Clayes sous Bois (FR)
(72) Inventeur: Pairault, Jean-Jacques, 92100 BOULOGNE BILLANCOURT (FR)
(74) Mandataire: Pellegrini, Marie Claude

(56) Documents cités:
- WO-A-20/05117019
- HOWARD DAVID , MICHAEL MCTAGUE, INTEL CORPORATION: "Fully Buffered DIMM (FB-DIMM) Design Considerations"[Online] XP002413708 18-02-2004 Extrait de l'Internet: URL:http://www.idt.com/content/OSA-S009.pd f> [extrait le 2004-02-18]
- PETE VOGT, INTEL CORPORATION: "Fully Buffered DIMM (FB-DIMM) Server Memory Architecture : Capacity, Performance, Reliability, and Longevity"[Online] XP002413709 18-02-2004 Extrait de l'Internet: URL:http://www.idt.com/content/OSA_S008_FB -DIMM-Arch.pdf> [extrait le 2004-02-18]
- JUERGEN CARSTENS: "Speichercontroller mit programmierbarer Impedanz der Ausgangstreiber" 16 avril 2005 (2005-04-16), IP.COM JOURNAL, IP.COM INC., WEST HENRIETTA, NY, US , XP013023926 ISSN: 1533-0001 * le document en entier *

## Description

### DOMAINE TECHNIQUE DE L'INVENTION

La présente invention est relative au domaine des mémoires à base de barrettes FB-Dimms. L'invention concerne plus particulièrement un agencement de carte à modules mémoire Dimm totalement bufférisés et une utilisation dans une carte mémoire de technologie FBD (Fully Buffered Dimm) d'au moins une puce AMB (Advanced Memory Buffer) entre deux modules mémoire consécutifs.

### ARRIERE-PLAN TECHNOLOGIQUE DE L'INVENTION

Il est connu dans l'état de la technique d'utiliser des modules mémoire de type DIMM (Dual Inline Memory Module) dans des équipements informatiques, ces modules mémoire se présentant généralement sous la forme de barrettes mémoire 64 bits, équipées de 84 connecteurs de chaque côté, soit 168 au total. Une topologie en guirlande ou "daisy chain" est souvent utilisée pour établir la connexion entre les modules mémoire. Plus particulièrement, une telle topologie est utilisée entre modules de type FBD (Fully Buffered Dimm ;JEDEC JC-45.4). L'expression "daisy chain" sert à désigner un mode de liaison entre modules ou entre machines qui utilise une seule ligne logique pour relier les modules les uns aux autres.

Un point essentiel de l'architecture de canal FB-DIMM est ainsi une connexion point à point série haute vitesse entre le contrôleur mémoire et les modules sur le canal. De façon connue, les modules FBD se connectent en «daisy chain» sur un canal FB-DIMM. Ces modules FDB sont dotés de circuits tampons de mémoire avancés (AMB) conformes aux spécifications JEDEC AMB (Advanced Memory Buffer). La puce AMB placée sur chaque module FBD collecte et distribue les données sortant ou entrant sur un module, tamponne les données dans la puce et les reçoit ou les envoie vers le module FBD ou le contrôleur mémoire suivant. Cette structure de canal résout les problèmes de latence de tampon (buffer) qui sont courants dans la technologie DIMM à registres et permet aux concepteurs d'utiliser un grand nombre de modules FBD dans un même système. Il est possible de mettre jusqu'à 8 modules DIMM sur un canal.

Un agencement de carte à modules mémoire FB-Dimm est par exemple par les transparents de la conférence du 18 février 2004 "Fully Buffered DIMM (FB-DIMM) design considerations" par Howard David et Michael McTague, Intel Corp., pouvant être retrouvés à l'URL : http://www.idt.com/content/OSA-S009.pdf.

Dans l'art antérieur, les modules ou barrettes FBD sont reliés suivant une chaîne de connexion en étant régulièrement espacés les uns des autres (voir par exemple les documents US 2004/0123016 et US 6 658 509). Dans cette chaîne, les contraintes de longueur électrique entre 2 barrettes consécutives sont très sévères compte tenu des caractéristiques électriques de la liaison (des vitesses élevées avec par exemple plusieurs milliards de transferts par seconde (GT/s), faible largeur souhaitée des tracés sur les cartes, compatibilité avec des matériaux cartes standard et bon marché : FR4, ...) et de celles du circuit AMB pour lequel il faut minimiser la dissipation thermique ainsi que le prix de revient.

Ainsi à des fréquences de 6,4 GT/s, la recommandation généralement acceptée pour l'écart entre 2 modules ou barrettes consécutives sur la même carte est qu'il soit compris entre 8,9 et 22,8 mm. De plus, un écart de 22,8 mm n'est possible que si les deux connecteurs de barrettes sont sur le même support, les distances autorisées étant sinon encore réduites. A titre d'exemple, il n'est pas permis de réaliser une connexion reliant des modules FBD situés sur différents étages superposés en raison de l'espacement trop important entre les étages (la distance entre les barrettes ne respecte plus les contraintes précitées).

II existe donc un besoin d'élargir le champ des topologies possibles pour les modules mémoire FB-Dimm.

### DESCRIPTION GENERALE DE L'INVENTION

La présente invention a pour objet de pallier un ou plusieurs des inconvénients de l'art antérieur, en proposant un agencement de carte à modules mémoire Dimm totalement bufférisés permettant d'assouplir les contraintes géométriques d'implantation des barrettes mémoire de cette technologie FB-Dimm.

A cet effet, l'invention concerne un agencement d'une carte mémoire ayant au moins une série de modules mémoire reliés sur une ligne de connexion à un contrôleur mémoire, caractérisé en ce que la ligne de connexion comporte au moins deux modules mémoire FBD consécutifs dotés chacun d'un composant de type AMB et connectés entre eux par au moins un composant AMB intermédiaire de ré-amplification de la ligne de connexion.

Selon une autre particularité, le composant AMB intermédiaire comporte des moyens de contact électrique pour être connecté à des moyens de connexion de la carte mémoire disposés entre les deux modules mémoire FBD consécutifs.

Selon une autre particularité, le composant AMB intermédiaire comprend un dispositif de traversée rapide des données entrantes, en liaison directe avec une interface sérielle de canal FB-Dimm.

Selon une autre particularité, le composant AMB intermédiaire est relié à un connecteur de la carte mémoire à la place d'un module mémoire.

Selon une autre particularité, le composant AMB intermédiaire est placé sur une interface de connexion de la carte mémoire avec une carte auxiliaire à modules mémoire permettant de prolonger la ligne de connexion.

Selon une autre particularité, le contrôleur mémoire de la carte mémoire, est relié à au moins une paire de canaux, chaque canal d'une paire étant relié à un connecteur de liaison externe de la carte mémoire, le connecteur de liaison externe comportant deux séries distinctes de plages de contact électrique reliées respectivement aux deux canaux d'une paire prévus sur la carte.

Selon une autre particularité, chacun des canaux d'une paire est équipé d'un composant AMB intermédiaire.

Selon une autre particularité, le connecteur de liaison externe est prévu pour être associé à une interface de connexion assurant la liaison avec une carte mémoire auxiliaire.

Selon une autre particularité, l'agencement selon l'invention comporte une interface de connexion insérée dans ledit connecteur de liaison externe, l'interface de connexion incluant :
- deux fiches de type FBD compatibles avec ledit connecteur de liaison externe, munies chacune de deux séries de plages de contact électrique, une première de ces fiches constituant un moyen de liaison adapté pour être relié à deux canaux de sortie de la carte mémoire et une seconde de ces fiches constituant un moyen de liaison adapté pour être relié à deux canaux d'entrée d'une carte mémoire auxiliaire du type à série de modules mémoire FBD ; et
- des moyens de liaisons internes pour relier la première fiche à la seconde fiche dans ladite interface et comprenant au moins un composant AMB intermédiaire de ré-amplification de la connexion inter-cartes.

Un autre objet de l'invention est de proposer une interface de connexion permettant de relier une carte principale à une carte mémoire qui est adaptée aux contraintes des systèmes de mémorisation avec canaux constitués par paire, le mode de connexion visant à faciliter la constitution d'une configuration mémoire évolutive, par accroissement progressif et simultané des deux canaux.

A cet effet, l'invention concerne une interface de connexion pour connecter une carte principale comportant au moins un processeur à une carte mémoire auxiliaire du type à série de modules mémoire, caractérisé en ce qu'elle comporte :
- deux fiches de connexion de type FBD munies chacune de deux séries de plages de contact électrique, chacune des fiches étant insérable dans un connecteur à deux voies de type FBD, une première de ces fiches constituant un moyen de liaison adapté pour être relié à deux canaux de sortie de la carte principale et une seconde de ces fiches constituant un moyen de liaison adapté pour être relié à deux canaux d'entrée d'une carte mémoire auxiliaire du type à série de modules mémoire FBD répartis suivant au moins deux canaux ; et
- des moyens de liaisons internes pour relier la première fiche (201) à la seconde fiche dans ladite interface et comprenant au moins un composant AMB intermédiaire de ré-amplification de la connexion inter-cartes.

Ainsi, l'invention permet avantageusement d'allonger la ligne de connexion par l'utilisation d'un ou plusieurs composants AMB de ré-amplification. L'interface de connexion assure un appariement des connecteurs FB-Dimm, un premier connecteur étant utilisé comme double entrée en liaison avec une carte principale et un second connecteur étant utilisé comme double sortie en liaison avec une carte mémoire auxiliaire. Ce type d'interface de connexion permet d'ajouter facilement une ou plusieurs carte filles optionnelles à une carte mère.

Un objectif supplémentaire de l'invention est de proposer une interface de connexion permettant un gain de compacité tout en permettant une bonne accessibilité des modules mémoires.

A cet effet, l'interface de connexion comporte au moins un corps adaptateur intermédiaire solidaire de la première fiche et de la seconde fiche et s'étendant sur une surface suffisamment grande pour permettre de supporter la carte mémoire auxiliaire et maintenir cette dernière espacée par rapport à la carte principale, tout en étant adapté aux longueurs des liaisons internes qui relient la première fiche à la seconde fiche.

Selon une autre particularité, le corps adaptateur intermédiaire est une carte rallonge d'une carte principale et les liaisons internes forment deux canaux dotés chacun d'un composant AMB amplificateur.

Selon une autre particularité, les deux fiches sont identiques et réparties de part et d'autre d'un plan médian de l'interface de connexion.

Selon une autre particularité, les deux fiches sont coplanaires et orientées en sens opposé pour permettre la connexion de cartes mémoires auxiliaires disposées parallèlement au plan médian.

Selon une autre particularité, chaque composant AMB intermédiaire comprend un dispositif de traversée rapide des données entrantes, en liaison directe avec une interface sérielle de canal FB-Dimm.

Un autre objet de l'invention est de proposer une utilisation inédite d'un composant AMB pour proposer une plus grande variété de cartes à modules mémoire Dimm totalement bufférisés.

A cet effet, l'invention concerne une utilisation d'un composant AMB dans un ensemble de mémorisation à modules mémoire Dimm totalement bufférisés reliés en série, caractérisée en ce que le composant AMB est disposé sur une ligne de connexion des modules mémoire à un contrôleur mémoire de l'ensemble, pour ré-amplifier la ligne de connexion entre deux modules mémoire FBD consécutifs.

Ainsi, le composant AMB d'encombrement réduit permet d'assouplir les contraintes géométriques d'implantation des barrettes mémoire de la technologie FB-Dimm.

L'invention, avec ses caractéristiques et avantages, ressortira plus clairement à la lecture de la description faite en référence aux dessins annexés dans lesquels:
- la figure 1 représente une vue schématique de l'agencement selon un mode de réalisation de l'invention, avec une connexion entre modules mémoire rallongée grâce au composant AMP amplificateur,
- la figure 2 montre un bloc-diagramme du composant AMB,
- la figure 3 représente une vue schématique du raccordement entre une carte mère et une carte mémoire réalisé à l'aide d'une interface de connexion selon l'invention,

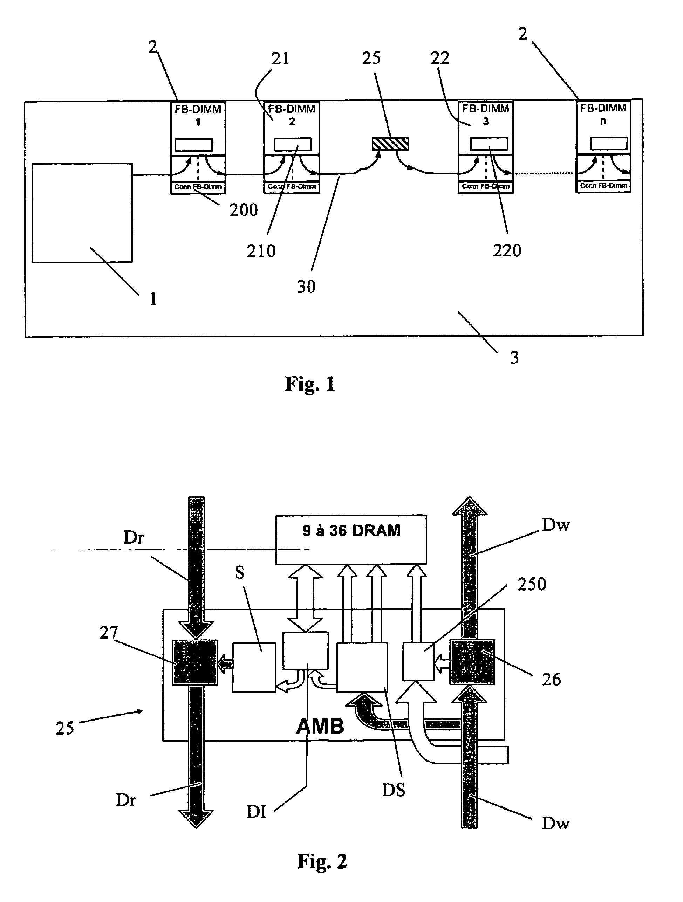

- la figure 2 montre une variante de connexion des modules mémoire qui utilise plusieurs composants AMB,

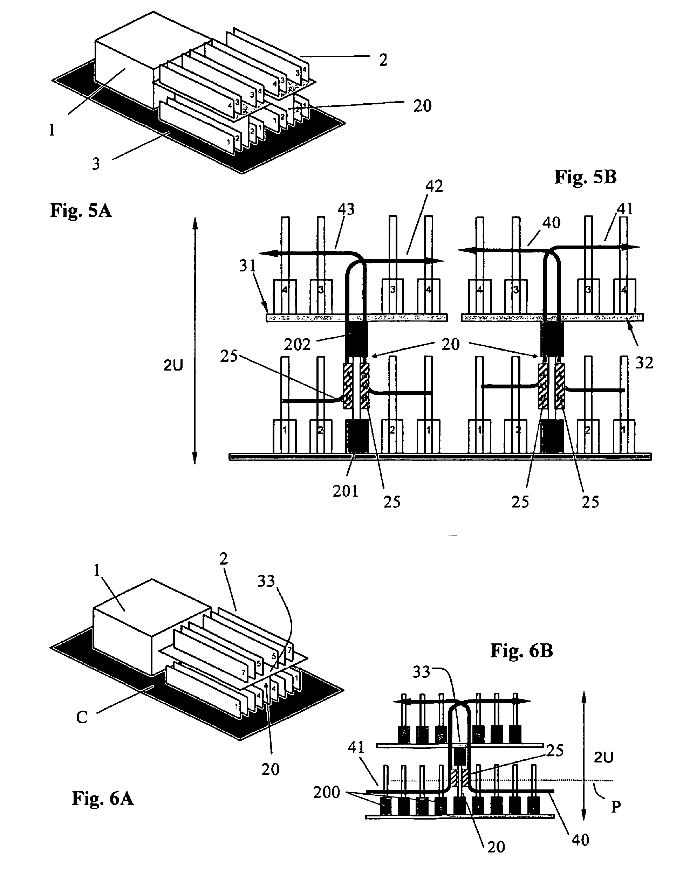

- les figures 5A et 5B montrent respectivement une vue en perspective et une vue en coupe d'une liaison entre une carte principale et une carte mémoire auxiliaire réalisée à l'aide d'une interface de connexion selon l'invention,
- les figures 6A et 6B montrent respectivement une vue en perspective et une vue en coupe des liaisons permises selon l'invention entre une carte principale et deux cartes mémoire auxiliaires.

### DESCRIPTION DES MODES DE REALISATION PREFERES DE L'INVENTION

L'invention propose d'utiliser un composant AMB (Advanced Memory Buffer) (25) de façon inhabituelle dans un ensemble de mémorisation à modules mémoire Dimm totalement bufférisés reliés en série pour rallonger la connexion et permettre notamment la réalisation de connexions entre des groupes de mémorisation qui ne sont pas alignés. Selon une utilisation classique, l'AMB a pour fonction essentielle d'une part de servir de tampon de données pour les échanges entre les chips mémoires de la barrette et le contrôleur mémoire qui gère le canal FB-Dimm, et d'autre part d'assurer l'adaptation entre les interfaces des chips mémoire standard du commerce (type DDR2 ou DDR3) et l'interface sérielle du canal FB-Dimm.

L'invention a pour objet d'utiliser le composant AMB (25) comme ré-amplificateur du canal FB-Dimm du fait de son rôle habituel dans les montages série « daisy chain » et de la présence d'un dispositif de traversée rapide (26, 27) qui permet de ré-amplifier les données.

L'invention vise ainsi à mieux positionner les modules mémoires (barrettes), de façon ergonomique. En général à l'intérieur d'un boîtier de 2 ou 3U (1U = 44,45 mm selon le standard EIA-310-D permettant le repérage et le positionnement vertical des équipements informatiques dans une baie de type haute densité des centres de données, des salles réseau et des armoires de câblage), il est possible d'utiliser la hauteur pour répartir les modules mémoire, ce qui permet de libérer de la surface de la carte support.

Selon l'invention, le composant AMB (25) est une puce, disposée spécifiquement sur une ligne de connexion (30) des modules mémoire (2) à un contrôleur mémoire (1) de l'ensemble, qui permet de rallonger la distance entre des modules mémoire FBD (21, 22) consécutifs. Les contraintes de longueur électrique ne posent alors pas de problème particulier puisque le composant AMB (25) permet de ré-amplifier la ligne de connexion (30) entre deux modules mémoire FBD (21, 22) consécutifs, comme illustré à la figure 1.

Contrairement aux composants standards conçus pour ré-amplifier un signal, le composant AMB (25) est une puce de faible encombrement qui est particulièrement bien adaptée aux caractéristiques spécifiques du canal FB-Dimm. La fabrication d'un ré-amplificateur spécifique serait certes envisageable dans l'optique d'allonger un canal FB-Dimm mais il faudrait alors concevoir un ré-amplificateur d'un nouveau type qui serait coûteux.

De façon connue en soi, l'organisation en série au sein d'une carte mémoire Dimm requiert la présence d'un circuit AMB (Advanced Memory Buffer) sur chaque barrette de mémoire. Ce composant AMB coordonne et organise les données en mémoire transférées en paquets, stockant en tampon même les données mémoire, et plus seulement les adresses mémoires. D'où le nom Fully-Buffered. Évidemment, la correction d'erreur ECC (Error Correction Code) est toujours présente, encore grâce aux circuits AMB, qui vont travailler à corriger les erreurs d'une manière synchronisée entre les différentes barrettes de RAM (Random Access Memory).

En référence à la figure 2, les fonctions du composant AMB (25) utilisées selon l'invention permettent une ré-amplification du signal. Le composant AMB (25) incorporé dans la ligne de connexion (30) selon l'invention est un composant isolé des zones de mémorisation. L'AMB (25) ainsi employé ne remplit donc plus ses fonctions habituelles :
- servir de tampon de données pour les échanges entre les circuits mémoires de la barrette et le contrôleur mémoire (1) qui gère la connexion (30) formant un canal FB-Dimm ; et
- assurer l'adaptation entre les interfaces des circuits mémoire standard du commerce et l'interface sérielle du canal FB-Dimm.

En revanche, il sert de ré-amplificateur du canal FB-Dimm, fonction qu'il remplit en définitive très bien du fait de son rôle habituel dans la « daisy chain » et du dispositif (26, 27) de traversée rapide (« pass-through ») dont il est équipé. Comme illustré à la figure 2, le composant AMB intermédiaire (25) dispose d'un dispositif (26, 27) de traversée rapide des données entrantes (Dr, Dw), en liaison directe avec une interface sérielle de canal FB-Dimm. Ces données (Dr, Dw) ne font que traverser la puce représentée à la figure 2. L'horloge (250) permet de réguler la traversée des données (Dr, Dw). Cette horloge (250) est utilisée dans la technologie DDR (Double Data Rate Memory) qui permet à chaque cycle d'horloge de transmettre deux paquets de données.

Les mécanismes d'adressage, qui sélectionnent le composant AMB à utiliser parmi l'ensemble des composants de ce type placés sur un même canal, ne sélectionneront jamais le composant AMB utilisé comme amplificateur car aucune des adresses mémoire qui seront demandées lors d'un accès à ce canal ne sera répertoriée comme dépendant de ce composant AMB spécifique supplémentaire. C'est pour cette raison que les fonctions habituelles susmentionnées ne sont plus remplies pour le composant intermédiaire AMB prévu selon l'invention. La mise en correspondance entre sous-espaces d'adresses et AMB fait partie des initialisations du canal qui sont effectuées avant de s'en servir.

Dans une carte (3) utilisant la technologie FB-DIMM, il s'établit un protocole entre le contrôleur-mémoire (1) et les modules mémoire (2). La carte (3) indiquée dans les figures 1, 3, 5A et 6A est une carte mère et le contrôleur-mémoire (1) une unité centrale de traitement (processeur). Avec la technologie FB-DIMM, le type de puces qui se trouve sur le module (2), par exemple de type DDR2 ou DDR3 n'a pas d'importance pour le contrôleur-mémoire (1) car celui-ci ne dialogue pas directement avec les puces mais uniquement avec le module (2). Le fait d'interposer des puces AMB (25) entre des modules mémoire (2) ne pose donc pas de complication et assure une ré-amplification opérée au niveau du composant AMB (25). Il est ainsi permis de multiplier par 2 la distance parcourue entre deux barrettes ou modules (2) successifs. La puce formant l'AMB (25) est considérablement moins volumineuse qu'une barrette mémoire et peut être implantée là où ne pouvait l'être la barrette suivante, par exemple à mi-chemin des 2 barrettes, sans créer de contrainte importante d'implantation.

Le composant AMB (25) est doté d'éléments (S, DS, DI) échangeurs de données aptes à échanger des données avec un ensemble de mémorisation (de 9 à 36 mémoires DRAM). Ces éléments (S, DS, DI), incluant un sérialisateur (S), un désérialisateur (DS) apte à décoder des données entrantes de commandes/écriture (Dw) et une interface de données (DI), sont inactifs en raison de l'absence de mémoire associée au composant AMB (25) qui sert d'amplificateur du signal. Le composant AMB (25) est utilisé selon l'invention comme ré-amplificateur du canal FB-Dimm qui relie deux modules mémoire (21, 22) consécutifs, comme illustré aux figures 1, 3 et 4.

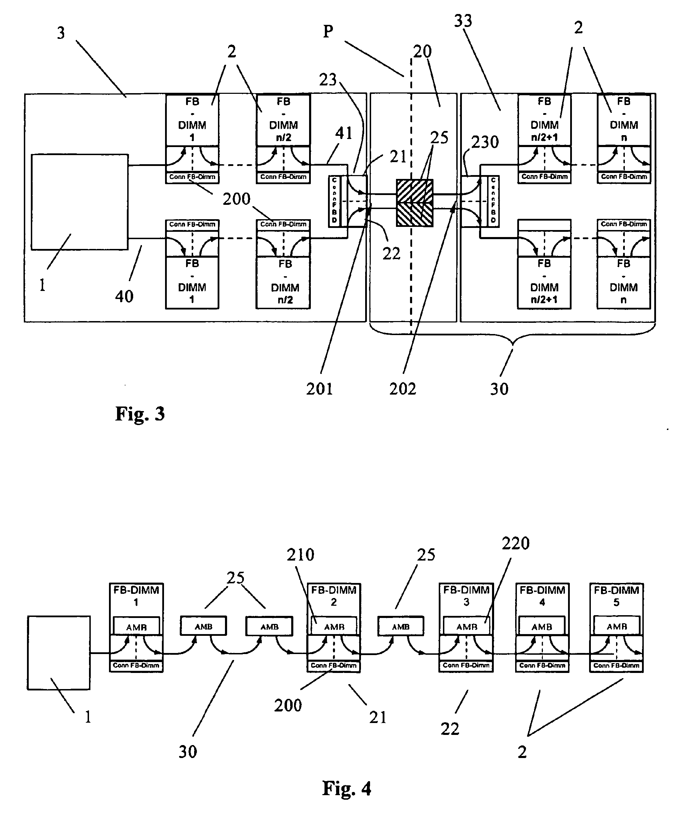

L'agencement de la carte mémoire (3) est alors modifié par rapport aux agencements connus car la ligne de connexion (30) comporte un composant AMB (25) de ré-amplification de la ligne (30) en position intermédiaire entre des modules mémoire FBD (21, 22) consécutifs dotés chacun d'un composant interne de type AMB (210, 220). Dans le mode de réalisation des figures 1 et 4, le composant AMB intermédiaire (25) peut occuper la place prévue pour un module mémoire (2). Ce composant AMB intermédiaire (25) comporte des moyens de contact électrique pour être connecté à des moyens de connexion de la carte mémoire (3) disposés entre les deux modules mémoire FBD (21, 22) consécutifs. Un connecteur (non représenté) de la carte mémoire (3) peut ainsi permettre de recevoir le composant AMB intermédiaire (25) à la place d'un module mémoire (2). Le connecteur peut consister en un simple emplacement de réception d'une broche ou moyen de connexion électrique analogue.

En référence aux figures 3, 5A, 5B, 6A et 6B, le composant AMB intermédiaire (25) peut être placé sur une interface de connexion de la carte mémoire (3) avec une carte auxiliaire (31, 32, 33) à modules mémoire (2) permettant de prolonger la ligne de connexion (30). La carte (3) est une carte mère dotée au maximum de 8 modules mémoire (2) de type FBD et la carte auxiliaire (31, 32, 33) permet ainsi d'améliorer les capacités en mémoire. Les modules mémoire (2) respectifs peuvent être ainsi connectés à l'aide d'un bus multiligne en « daisy chain », sur chaque canal FB-DIMM (40, 41).

Dans le mode de réalisation de la figure 3, il est prévu une interface de connexion adaptée pour connecter une carte mémoire auxiliaire (33) d'entrée-sortie multiligne en parallèle. De façon connue, il est possible de mettre jusqu'à huit modules mémoire DIMM sur un canal, chaque module (2) se présentant par exemple sous la forme de barrette mémoire. Le composant AMB (25) amplificateur peut être utilisé pour délocaliser les modules mémoire (2) de la carte principale (3), afin notamment de minimiser la surface d'occupation de la carte (3) qui inclut en général déjà un processeur. Ce processeur constitue le contrôleur-mémoire (1) qui communique par exemple par deux canaux (40, 41) ou plusieurs paires de canaux.

En référence à l'exemple de la figure 3, l'interface de connexion selon l'invention est particulièrement adaptée pour établir des liaisons entre une carte principale (3) à mémoire et une carte mémoire auxiliaire (31, 32, 33). Du fait que la carte mémoire auxiliaire (31, 32, 33) doit être du type à série de modules mémoire (2), comprenant avantageusement deux séries de ces modules (2), l'interface peut être dotée de deux fiches (201, 202) de connexion de type FBD munies chacune de deux séries distinctes de plages de contact électrique ou d'autres fiches de connexion ayant le bon nombre de contacts. Cette interface correspond par exemple au standard FBD, une première de ces fiches (201) constituant un moyen de liaison adapté pour relier deux canaux de sortie (40, 41) de la carte principale (3) et une seconde de ces fiches (202) constituant un moyen de liaison adapté pour relier deux canaux d'entrée d'une carte mémoire (31, 32, 33) du type à série de modules mémoire FBD répartis suivant au moins deux canaux. Dans un mode de réalisation, chacune des fiches (201, 202) peut correspondre à la fiche située sur un module mémoire FBD (2). Comme le connecteur (23, 230, 200) est symétrique, deux canaux FB-Dimms (40, 41) peuvent entrer (ou sortir) sur ses deux moitiés. Autrement dit, on peut utiliser un connecteur « in-out » comme un connecteur « in-in » ou comme un connecteur « out-out ». Dans un mode de réalisation alternatif avantageux, d'autres types de connecteur « in-in » et « out-out » sont prévus pour établir la liaison avec l'élément adaptateur (20).

On comprend que chacune des deux séries de plages de contact électrique prévue dans les fiches (201, 202) de l'interface de connexion permet de s'adapter indifféremment à une sortie d'un canal de transmission ou à une entrée d'un canal de transmission. Comme illustré à titre d'exemple non limitatif aux figures 3, 5B et 6B, une première fiche (201) constitue un moyen de liaison adapté pour être relié à deux canaux d'une carte principale (3) et la seconde fiche (202) constitue un moyen de liaison adapté pour être relié à deux canaux d'une carte mémoire auxiliaire (31, 32, 33) du type à deux séries de modules mémoire (2). Les séries de modules FB-DIMM sont réparties suivant les canaux respectifs de la carte mémoire (31, 32, 33).

Comme montré à la figure 3, des liaisons internes respectives sont prévues dans l'interface de connexion pour connecter la première fiche (201) à la seconde fiche (202). Ces liaisons internes forment par exemple deux canaux dotés chacun d'un composant AMB (25) amplificateur. L'interface de connexion permet donc de former avec une carte mémoire auxiliaire (33) une partie optionnelle (300) pouvant être raccordée à la carte principale (3). Dans un mode de réalisation préféré de l'invention, l'interface de connexion comporte au moins un corps adaptateur intermédiaire (20) solidaire de la première fiche (201) et de la seconde fiche (202). Ce corps adaptateur intermédiaire (20), par exemple constitué d'un matériau rigide, s'étend sur une surface suffisamment grande pour permettre de supporter la carte mémoire auxiliaire (31, 32, 33) et maintenir cette dernière espacée par rapport à la carte principale (3). Comme illustré notamment aux figures 5A et 6A, le corps adaptateur intermédiaire (20) peut consister en une carte rallonge, dotée par exemple de moyens de fixation disposés sur deux bords opposés de la carte rallonge et de conducteurs appropriés. Le corps adaptateur intermédiaire (20) peut être rendu solidaire de la carte à mémoire principale (3) ou d'une carte mémoire auxiliaire (31, 32, 33). Une carte mémoire auxiliaire (31, 32, 33) peut par exemple être prévue avec l'interface de connexion fixée de façon inamovible sur le corps de la carte (31, 32, 33).

Les deux fiches (201, 202) sont identiques et réparties de part et d'autre d'un plan médian (P) de l'interface de connexion. Les fiches (201, 202) sont par exemple coplanaires et orientées en sens opposé pour permettre la connexion de cartes mémoires auxiliaires (31, 32, 33) disposées parallèlement au plan médian (P, figure 6B).

En référence aux figures 5A et 6A, une topologie possible avec l'interface de connexion selon l'invention prévoit de répartir quatorze modules FBD sur deux niveaux de hauteur, de façon superposée. On utilise donc à profit l'espace « perdu » dans les agencements connus, au-dessus des composants électroniques intégrés sur la carte (3). La carte mémoire dite principale (3) peut alors être équipée de neuf emplacements (9 barrettes sur la carte CPU représentent une surface de 102 mm x 160 mm). Un tel agencement s'étend sur une hauteur de 2U (88,9 mm). L'occupation de la carte mémoire principale (3) est alors faible : seulement la moitié par exemple des modules mémoire (2) peut y être implantée.

L'accessibilité des modules mémoires (2) reste aisée, s'effectuant par le dessus du boîtier. Les deux canaux (40, 41) qui fonctionnent l'un avec l'autre, doivent avoir le même nombre de modules mémoire (2). Lorsqu'on augmente la capacité mémoire, on remplit les emplacements libres dans l'ordre, par exemple de 1 à 7. Lorsqu'on diminue la capacité mémoire, on retire les barrettes FB-Dimms ou modules analogues dans l'ordre inverse (continuité de la « daisy chain »). Dans l'exemple des figures 6A et 6B, intervenir sur les emplacements 1 à 4 situés au niveau de la carte mémoire principale (3) suppose qu'il n'y a pas de mémoire aux emplacements « 5 ». Dans ce cas la carte mémoire (33) peut être retirée (si elle a été installée) libérant l'accès aux modules mémoire (2) de la carte mémoire principale (3) à contrôleur-mémoire (1). Contrairement à un système figé, l'utilisation de l'interface de connexion selon l'invention confère un caractère amovible à la carte auxiliaire (31, 32, 33) équipée de ses modules mémoire (2).

Il est clair que le nombre de connecteurs (200) de modules mémoire (2) peut être augmenté de façon flexible grâce à l'interface de connexion selon l'invention. Ainsi, six connecteurs supplémentaires (200) sont prévus de façon à implanter au total sept connecteurs par canal (40, 41) dans l'exemple des figures 6A et 6B. Suivant le même principe, lorsque la carte principale (3) dispose de quatre canaux (40, 41, 42, 43), huit connecteurs supplémentaires (25) sont prévus dans l'exemple des figures 5A et 5B de façon à implanter au total quatre connecteurs par canal (40, 41, 42, 43). Dans ce dernier cas, deux cartes mémoires auxiliaires (31, 32) sont superposées à la carte principale (3).

Toutes les configurations où des cartes rallonges avec des fiches (201, 202) de connexion de type FDB sont placées entre deux connecteurs (23, 230) de type FB-Dimm successifs peuvent être constituées (pas seulement à la moitié de la « daisy chain »). L'interface de connexion selon l'invention doit simplement être dotée des moyens de liaisons internes comprenant au moins un composant AMB intermédiaire (25) de ré-amplification de la connexion (30) inter-cartes. Les cartes rallonges (optionnelles) comportent avantageusement un composant AMB (25) amplificateur par canal, comme illustré aux figures 3, 5B et 6B).

Comme illustré à la figure 3, la carte mémoire principale (3) dotée d'au moins une paire de canaux FBD reliée au processeur (1) comporte avantageusement un ou plusieurs connecteurs de liaison externe (23) ayant un nombre de contacts suffisant pour assurer une liaison entre la carte principale (3) et une carte fille. Ce connecteur (23) dispose de deux moitiés reliées chacune à un canal FBD distinct.

Dans l'exemple des figures 3 et suivantes, la carte mémoire principale (3) comporte des connecteurs de type FBD (200) prévus pour connecter des modules mémoire de type FBD (2). Ces connecteurs FBD (200) sont raccordés en série entre le processeur (1) de la carte principale (3) et le connecteur de liaison externe (23), le raccordement étant effectué pour chaque série par des liaisons simples d'un des canaux (40, 41). Autrement dit, chaque connecteur FBD (200) est interconnecté entre deux portions d'un même canal (40, 41). Chaque canal desservant une première série de connecteur FBD (200) débouche avec un autre canal distinct apparié qui dessert une seconde série de connecteur FBD (25) dans les moitiés respectives d'un connecteur de liaison externe (23). Chaque moitié du connecteur de liaison externe (23) comporte une série de plages de contact électrique reliée à un canal de la carte mémoire principale (3). Une série de plages de contact électrique est destinée à entrer en contact avec une série de plages de contact électrique correspondante disposée sur la fiche (201) de connexion de type FBD de l'interface servant à relier la carte principale (3) à une carte fille.

On comprend que le connecteur (23) de liaison externe est particulier puisqu'il est relié à deux canaux (40, 41) distincts de la carte mère, contrairement aux autres connecteurs (200) servant à connecter les modules mémoire (2). Il peut d'ailleurs s'agir d'un connecteur spécifique différent des connecteurs (200) FBD. Ainsi, ce connecteur (23) de liaison externe permet d'associer la carte principale (3) à une interface de connexion assurant la liaison avec une carte mémoire auxiliaire (31, 32, 33). L'interface de connexion est insérée dans ledit connecteur (23) de liaison externe, par un premier bord, un bord opposé étant inséré dans un connecteur spécifique (230) prévu sur la carte fille à relier à la carte mémoire principale (3). Le connecteur spécifique (230) de la carte mémoire auxiliaire (31, 32, 33) est relié à deux canaux respectivement équipés d'un module mémoire ou d'une série de modules mémoire (2).

Comme illustré aux figures 3 et suivantes, la carte mémoire auxiliaire (31, 32, 33) qui peut équiper la carte mémoire principale (3) dispose de canaux de la carte mémoire reliés chacun à un module de liaison avec une autre carte, en l'occurrence avec la carte principale (3). Ce module de liaison reçoit en tout deux canaux distincts de type FBD et comprend le connecteur (230) de type FBD ou autre connecteur adapté qui est spécifiquement relié aux deux canaux. Le connecteur spécifique (230) comporte deux séries distinctes de plages de contact électrique reliées respectivement aux deux canaux appariés de la carte mémoire auxiliaire (31, 32, 33). Comme représenté aux figures 5B et 6B, la carte mémoire auxiliaire (31, 32, 33) comprend deux faces opposées dont l'une supporte des connecteurs (200) de type FBD pour connecter des modules mémoire FBD (2) tandis que l'autre face supporte le connecteur (230) du module de liaison. Ce connecteur spécifique (230) est donc orienté de façon opposée par rapport aux autres connecteurs (200) et permet ainsi de recevoir une interface de connexion de type carte rallonge d'une carte mémoire principale (3). Le module de liaison de la carte mémoire (31, 32, 33) dispose d'éléments conducteurs permettant de raccorder les canaux de la carte (3, 31, 32) au connecteur spécifique (230). On comprend que dans la carte mémoire auxiliaire (31, 32, 33), chaque canal de type FBD est raccordé aux connecteurs (200) de type FBD par un chaînage en guirlande, chacun des canaux ayant une extrémité reliée audit module de liaison.

Un des avantages de l'invention est de pouvoir introduire, de façon simple et économique, davantage de flexibilité dans les topologies possibles pour les mémoires à base de barrettes FB-Dimms. De plus, les cartes (3) à modules mémoire (2) FB-Dimms obtenues selon l'invention n'altèrent pas les performances, la ré-amplification ne "coûtant" qu'un temps de l'ordre de 2ns seulement dans les spécifications des puces AMB. Il est également clair que les composants AMB (25) sont des puces d'un coût modique en raison de leur utilisation dans les barrettes mémoire (ils vont être vendus en très grande quantité et vont bénéficier par conséquent des effets d'échelle).

Un autre des avantages de l'invention est de faciliter, dans la technologie FB-Dimm, la connexion de cartes filles porteuses de modules mémoire (2) de façon à optimiser la surface de carte principale (carte CPU par exemple).

Il doit être évident pour les personnes versées dans l'art que la présente invention permet des modes de réalisation sous de nombreuses autres formes spécifiques sans l'éloigner du domaine d'application de l'invention comme revendiqué, l'invention ne devant pas être limitée aux détails donnés ci-dessus.

## Revendications

1. Agencement d'une carte mémoire (3) ayant au moins une série de modules mémoire (2) reliés sur une ligne de connexion (30) à un contrôleur mémoire (1), **caractérisé en ce que** la ligne de connexion (30) comporte au moins deux modules mémoire FBD (21, 22) consécutifs dotés chacun d'un composant de type AMB (210, 220) et connectés entre eux par au moins un composant AMB intermédiaire (25) de ré-amplification de la ligne de connexion (30).

2. Agencement selon la revendication 1, dans lequel le composant AMB intermédiaire (25) comporte des moyens de contact électrique pour être connecté à des moyens de connexion de la carte mémoire (3) disposés entre les deux modules mémoire FBD (21, 22) consécutifs

3. Agencement selon la revendication 1 ou 2, dans lequel le composant AMB intermédiaire (25) comprend un dispositif de traversée rapide des données entrantes, en liaison directe avec une interface sérielle de canal FB-Dimm.

4. Agencement selon une des revendications 1 à 3, dans lequel le composant AMB intermédiaire (25) est relié à un connecteur de la carte mémoire (3) à la place d'un module mémoire (2).

5. Agencement selon une des revendications 1 à 3, dans lequel le composant AMB intermédiaire (25) est placé sur une interface de connexion de la carte mémoire (3) avec une carte auxiliaire (31, 32, 33) à modules mémoire (2) permettant de prolonger la ligne de connexion (30).

6. Agencement selon une des revendications 1 à 3, dans lequel le contrôleur mémoire (1) de la carte mémoire (3), est relié à au moins une paire de canaux (40, 41), chaque canal (40, 41) d'une paire étant relié à un connecteur de liaison externe (23) de la carte mémoire (3), le connecteur de liaison externe (23) comportant deux séries distinctes (21, 22) de plages de contact électrique reliées respectivement aux deux canaux (40, 41) d'une paire prévus sur la carte (3).

7. Agencement selon la revendication 6, dans lequel chacun des canaux (40, 41) d'une paire est équipé d'un composant AMB intermédiaire (25).

8. Agencement selon la revendication 6 ou 7, dans lequel le connecteur de liaison externe (23) est prévu pour être associé à une interface de connexion assurant la liaison avec une carte mémoire auxiliaire (31, 32, 33).

9. Agencement selon une des revendications 6 à 8, comportant une interface de connexion insérée dans ledit connecteur de liaison externe (23), l'interface de connexion incluant :
- deux fiches (201, 202) de type FBD compatibles avec ledit connecteur de liaison externe (23), munies chacune de deux séries de plages de contact électrique, une première de ces fiches (201) constituant un moyen de liaison adapté pour être relié à deux canaux de sortie (40, 41) de la carte mémoire (3) et une seconde de ces fiches (202) constituant un moyen de liaison adapté pour être relié à deux canaux d'entrée d'une carte mémoire auxiliaire (31, 32, 33) du type à série de modules mémoire FBD ; et
- des moyens de liaisons internes pour relier la première fiche (201) à la seconde fiche (202) dans ladite interface et comprenant au moins un composant AMB intermédiaire (25) de ré-amplification de la connexion (30) inter-cartes.

10. Interface de connexion pour connecter une carte principale (3) comportant au moins un processeur à une carte mémoire auxiliaire (31, 32, 33) du type à série de modules mémoire (2), **caractérisé en ce qu'**elle comporte :
- deux fiches (201, 202) de connexion de type FBD munies chacune de deux séries de plages de contact électrique, chacune des fiches étant insérable dans un connecteur à deux voies de type FBD, une première de ces fiches (251) constituant un moyen de liaison adapté pour être relié à deux canaux de sortie (40, 41) de la carte principale (3) et une seconde de ces fiches (202) constituant un moyen de liaison adapté pour être relié à deux canaux d'entrée d'une carte mémoire auxiliaire (31, 32, 33) du type à série de modules mémoire FBD répartis suivant au moins deux canaux ; et
- des moyens de liaisons internes pour relier la première fiche (201) à la seconde fiche (202) dans ladite interface et comprenant au moins un composant AMB intermédiaire (25) de ré-amplification de la connexion (30) inter-cartes.

11. Interface selon la revendication 10, comportant au moins un corps adaptateur intermédiaire (20) solidaire de la première fiche (201) et de la seconde fiche (202) et s'étendant sur une surface suffisamment grande pour permettre de supporter la carte mémoire auxiliaire (31, 32, 33) et maintenir cette dernière espacée par rapport à la carte principale (3), tout en étant adapté aux longueurs des liaisons internes qui relient la première fiche (201) à la seconde fiche (202).

12. Interface de connexion selon la revendication 11, dans laquelle le corps adaptateur intermédiaire (20) est une carte rallonge d'une carte principale (3) et les liaisons internes forment deux canaux dotés chacun d'un composant AMB (25) amplificateur.

13. Interface selon une des revendications 10 à 12, dans laquelle les deux fiches (201, 202) sont identiques et réparties de part et d'autre d'un plan médian (P) de l'interface de connexion.

14. Interface selon une des revendications 10 à 13, dans laquelle les deux fiches (201, 202) sont coplanaires et orientées en sens opposé pour permettre la connexion de cartes mémoires auxiliaires (31, 32, 33) disposées parallèlement au plan médian (P).

15. Interface selon une des revendications 10 à 14, dans laquelle chaque composant AMB intermédiaire (25) comprend un dispositif de traversée rapide des données entrantes, en liaison directe avec une interface sérielle de canal FB-Dimm.

16. Utilisation d'un composant AMB (25) dans un ensemble de mémorisation à modules mémoire Dimm totalement bufférisés reliés en série, **caractérisée en ce que** le composant AMB (25) est disposé sur une ligne de connexion (30) des modules mémoire (2) à un contrôleur mémoire (1) de l'ensemble, pour ré-amplifier la ligne de connexion (30) entre deux modules mémoire FBD (21, 22) consécutifs.

## Claims

1. An arrangement of a memory card (3) with at least one series of memory modules (2) connected via a connecting line (30) to a memory controller (1), **characterised in that** the connecting line (30) comprises at least two consecutive FBD memory modules (21, 22), each equipped with a component of the AMB type (210, 220) and connected together by at least one intermediate AMB component (25) for re-amplification of the connecting line (30).

2. An arrangement according to claim 1, in which the intermediate AMB component (25) comprises electrical contact means to be connected to connection means of the memory card (3) disposed between the two consecutive FBD memory modules (21, 22).

3. An arrangement according to claim 1 or 2, in which the intermediate AMB component (25) comprises a rapid transit device for the incoming data, which is linked directly to an FB-Dimm channel serial interface.

4. An arrangement according to one of claims 1 to 3, in which the intermediate AMB component (25) is connected to a connector of the memory card (3) in the place of a memory module (2).

5. An arrangement according to one of claims 1 to 3, in which the intermediate AMB component (25) is placed on a connection interface of the memory card (3) with an auxiliary card (31, 32, 33) with memory modules (2) allowing the connecting line to be extended (30).

6. An arrangement according to one of claims 1 to 3, in which the memory controller (1) on the memory card (3), is connected to at least one pair of channels (40, 41), each channel (40, 41) of a pair being connected to an external link connector (23) on the memory card (3), the external link connector (23) comprising two distinct series (21, 22) of electrical contact strips connected respectively to the two channels (40, 41) of a pair provided on the card (3).

7. An arrangement according to claim 6, in which each of the channels (40, 41) of a pair is fitted with an intermediate AMB component (25).

8. An arrangement according to claim 6 or 7, in which the external link connector (23) is arranged to be associated with a connection interface providing the link with an auxiliary memory card (31, 32, 33).

9. An arrangement according to one of claims 6 to 8, comprising a connection interface inserted into said external link connector (23), the connection interface including:-
- two plugs (201, 202) of the FBD type compatible with said external link connector (23), each equipped with two series of electrical contact strips, a first of these plugs (201) constituting a linking means adapted to be connected to two output channels (40, 41) of the memory card (3), and a second of these plugs (202) constituting a linking means adapted to be connected to two input channels of an auxiliary memory card (31, 32, 33) of the type with a series of FBD memory modules; and
- internal connection means to connect the first plug (201) to the second plug (202) in said interface, and comprising at least one intermediate AMB component (25) for re-amplification of the inter-card connection (30).

10. A connection interface for connecting a main card (3) including at least one processor to an auxiliary memory card (31, 32, 33) of the type with a series of memory modules (2), **characterised in that** it includes:
- two connecting plugs (201, 202) of the FBD type each equipped with two series of electrical contact strips, each of the plugs being insertable into a two-way connector of the FBD type, a first of these plugs (251) constituting a linking means adapted to be connected to two output channels (40, 41) of the main card (3) and a second of these plugs (202) constituting a linking means adapted to be connected to two input channels of an auxiliary memory card (31, 32, 33) of the type with a series of FBD memory modules divided between at least two channels; and
- internal connection means to connect the first plug (201) to the second plug (202) in said interface, and comprising at least one intermediate AMB component (25) for re-amplification of the inter-card connection (30).

11. An interface according to claim 10, including at least one intermediate adapter body (20) attached to the first plug (201) and the second plug (202) and extending over a sufficiently large area to provide support for the auxiliary memory card (31, 32, 33) and to keep the latter spaced in relation to the main card (3), while also being adapted to the lengths of the internal links connecting the first plug (201) to the second plug (202).

12. A connection interface according to claim 11, in which the intermediate adapter body (20) is an extension card for a main card (3) and the internal links form two channels, each equipped with an AMB amplifier component (25).

13. An interface according to one of claims 10 to 12, in which the two plugs (201, 202) are identical and placed on either side of a median plane (P) of the connection interface.

14. An interface according to one of claims 10 to 13, in which the two plugs (201, 202) are coplanar, and oriented in opposite directions to allow the connection of auxiliary memory cards (31, 32, 33) placed parallel to the median plane (P).

15. An interface according to one of claims 10 to 14, in which each intermediate AMB component (25) includes a rapid transit device for the incoming data, which is linked directly to an FB-Dimm channel serial interface

16. The use of an AMB component (25) in a memory installation with fully buffered Dimm memory modules connected in series, **characterised in that** the AMB component (25) is disposed on a connecting line (30) from the memory modules (2) to a memory controller (1) of the installation, in order to re-amplify the connecting line (30) between two consecutive FBD memory modules (21, 22).

## Patentansprüche

1. Anordnung einer Speicherkarte (3), die mindestens eine Reihe von Speichermodulen (2) besitzt, die über eine Verbindungs-Leitung (30) an einen Speichercontroller (1) angebunden sind, **dadurch gekennzeichnet, dass** die Verbindungs-Leitung (30) mindestens zwei konsekutive FBD-Speichermodule (21, 22) enthält, die jeweils mit einer Komponente der Art AMB (210, 220) ausgestattet und untereinander über mindestens eine zwischenliegende AMB-Komponente (25) zur Wiederverstärkung der Verbindungs-Leitung (30) verbunden sind.

2. Anordnung nach Anspruch 1, in der die zwischenliegende AMB-Komponente (25) elektrische Kontaktmittel enthält, um mit Verbindungs-Mitteln der Speicherkarte (3), die zwischen den beiden konsekutiven FBD-Speichermodulen (21, 22) angeordnet sind, verbunden zu werden.

3. Anordnung nach Anspruch 1 oder 2, in der die zwischenliegende AMB-Komponente (25) eine Vorrichtung enthält zur schnellen Durchleitung der eingehenden Daten, in direkter Verbindung mit einer seriellen FB-Dimm-Kanal-Schnittstelle.

4. Anordnung nach einem der Ansprüche 1 bis 3, in der die zwischenliegende AMB-Komponente (25) mit einem Anschluss der Speicherkarte (3) verbunden ist, anstelle eines Speichermoduls (2).

5. Anordnung nach einem der Ansprüche 1 bis 3, in der die zwischenliegende AMB-Komponente (25) platziert ist auf einer Verbindungs-Schnittstelle zur Verbindung der Speicherkarte (3) mit einer Nebenkarte (31, 32, 33) für Speichermodule (2), was das Verlängern der Verbindungs-Leitung (30) ermöglicht.

6. Anordnung nach einem der Ansprüche 1 bis 3, in der der Speichercontroller (1) der Speicherkarte (3) mit mindestens einem Paar von Kanälen (40, 41) verbunden ist, wobei jeder Kanal (41, 42) eines Paares mit einem Anschluss (23) für externe Verbindung der Speicherkarte (3) verbunden ist, wobei der Anschluss (23) für externe Verbindung zwei verschiedene Reihen (21, 22) von elektrischen Kontaktbereichen enthält, die jeweils mit einem der beiden Kanäle (40, 41) eines auf der Karte (3) vorgesehenen Paares verbunden sind.

7. Anordnung nach Anspruch 6, in der jeder der Kanäle (40, 41) eines Paares mit einer zwischenliegenden AMB-Komponente (25) ausgestattet ist.

8. Anordnung nach Anspruch 6 oder 7, in der der Anschluss für externe Verbindung (23) dafür vorgesehen ist, mit einer Verbindungs-Schnittstelle verknüpft zu werden, die die Verbindung mit einer Neben-Speicherkarte (31, 32, 33) sicherstellt.

9. Anordnung nach einem der Ansprüche 6 bis 8, die eine in den genannten Anschluss für externe Verbindung (23) eingefügte Verbindungs-Schnittstelle enthält, wobei die Verbindungs-Schnittstelle einschließt:
- zwei Stecker (201, 202) der Art FBD, die kompatibel zum genannten Anschluss für externe Verbindung (23) sind, jeweils mit zwei Reihen von elektrischen Kontaktbereichen ausgestattet, wobei ein erster dieser Stecker (201) ein Verbindungsmittel bildet, das angepasst ist, um mit zwei Ausgangs-Kanälen (40, 41) der Speicherkarte (3) verbunden zu werden, und ein zweiter dieser Stecker (202) ein Verbindungsmittel bildet, das angepasst ist, um mit zwei Eingangs-Kanälen einer Neben-Speicherkarte (31, 32, 33) von der Art von Reihen von FBD-Speichermodulen verbunden zu werden; und
- interne Verbindungsmittel, um in der genannten Schnittstelle den ersten Stecker (201) mit dem zweiten Stecker (202) zu verbinden, und die mindestens eine zwischenliegende AMB-Komponente (25) zur Wiederverstärkung der Verbindung (30) zwischen den Karten enthalten.

10. Verbindungs-Schnittstelle zum Verbinden einer Haupt-Karte (3), die mindestens einen Prozessor enthält, mit einer Neben-Speicherkarte (31, 32, 33) von der Art mit einer Reihe von Speichermodulen (2), **dadurch gekennzeichnet, dass** sie enthält:
- zwei Verbindungs-Stecker (201, 202) von der Art FBD, die jeweils mit zwei Reihen von elektrischen Kontaktbereichen versehen sind, wobei jeder der Stecker in einen Verbinder der Art FBD mit zwei Kanälen einführbar ist, wobei ein erster dieser Stecker (251) ein Verbindungsmittel bildet, das angepasst ist, um mit zwei Ausgangs-Kanälen (40, 41) der Haupt-Karte (3) verbunden zu werden, und ein zweiter dieser Stecker (202) ein Verbindungsmittel bildet, das angepasst ist, um mit zwei Eingangs-Kanälen einer Neben-Speicherkarte (31, 32, 33) von der Art mit Reihen von FBD-Speichermodulen, die in Reihe auf mindestens zwei Kanäle verteilt sind; und
- interne Verbindungsmittel, um den ersten Stecker (201) mit dem zweiten Stecker (202) in der genannten Schnittstelle zu verbinden, und die mindestens eine zwischenliegende AMB-Komponente (25) zur Wiederverstärkung der Verbindung (30) zwischen den Karten enthalten.

11. Schnittstelle nach Anspruch 10, die mindestens einen zwischenliegenden Adapter-Körper (20) enthält, der zusammenhängend ausgeführt ist mit dem ersten Stecker (201) und dem zweiten Stecker (202) und sich über eine ausreichend große Fläche erstreckt, um das Tragen der Neben-Speicherkarte (31, 32, 33) zu ermöglichen und letztere bezüglich der Haupt-Karte (3) auf Abstand zu halten, wobei er an die Längen der internen Verbindungen, die den ersten Stecker (201) mit dem zweiten Stecker (202) verbinden, angepasst ist.

12. Verbindungs-Schnittstelle nach Anspruch 11, in der der zwischenliegende Adapter-Körper (20) eine Verlängerungs-Karte einer Haupt-Karte (3) ist und in der die internen Verbindungen zwei Kanäle bilden, die jeweils mit einer AMB-Verstärkungs-Komponente (25) ausgestattet sind.

13. Schnittstelle nach einem der Ansprüche 10 bis 12, in der die beiden Stecker (201, 202) identisch sind und beiderseits einer Mittelebene (P) der Verbindungs-Schnittstelle angeordnet sind.

14. Schnittstelle nach einem der Ansprüche 10 bis 13, in der die beiden Stecker (201, 202) koplanar sind und entgegengesetzt ausgerichtet sind, um die Verbindung der Neben-Speicherkarten (31, 32, 33), die parallel zur Mittelebene (P) angeordnet sind, zu ermöglichen.

15. Schnittstelle nach einem der Ansprüche 10 bis 14, in der jede zwischenliegende AMB-Komponente (25) eine Vorrichtung zur schnellen Durchleitung der eingehenden Daten enthält, in direkter Verbindung mit einer seriellen FB-Dimm-Kanal-Schnittstelle.

16. Verwendung einer AMB-Komponente (25) in einer Speicher-Einheit mit komplett gepufferten, in Reihe angebundenen Dimm-Speichermodulen, **dadurch gekennzeichnet, dass** die AMB-Komponente (25) angeordnet ist auf einer Verbindungs-Leitung (30) zur Verbindung der Speichermodule (2) mit einem Speicher-Controller (1) der Einheit, um die Verbindungs-Leitung (30) zwischen zwei konsekutiven FBD-Speichermodulen (21, 22) wiederzuverstärken.
